# FASCICULE DE BREVET EUROPEEN

(11) **EP 0 648 945 B1**
(45) Date de publication et mention de la délivrance du brevet: **02.06.1999**
(21) Numéro de dépôt: 94410086.6
(22) Date de dépôt: 11.10.1994
(51) Int. Cl.: F16B 35/02

(54) **Dispositif de fixation par vissage**
Gewindebefestigung
Screw-threaded fastening device

(30) Priorité: 15.10.1993 FR 9312405
(43) Date de publication de la demande: 19.04.1995
(73) Titulaire: SCHNEIDER ELECTRIC SA, 92100 Boulogne Billancourt (FR)
(72) Inventeur: Pellicano, Joseph, F-38050 Grenoble Cédex 09 (FR); Canali, Pascal, F-38050 Grenoble Cédex 09 (FR); Chambron, Robert, F-38050 Grenoble Cédex 09 (FR)
(74) Mandataire: Ritzenthaler, Jacques

(56) Documents cités:
- FR-A- 1 113 215
- GB-A- 2 257 220
- US-A- 3 158 059
- US-A- 4 339 218

## Description

La présente invention concerne de façon générale un dispositif de fixation par vissage et plus particulièrement un dispositif de fixation par vissage comprenant une pièce femelle munie d'un trou présentant des filets de taraudage et une pièce mâle présentant des filets de filetage externe.

Un dispositif de fixation par vissage classique comprend généralement une pièce femelle, qui peut être assimilée à un écrou, et qui comporte un trou sensiblement cylindrique taraudé et une pièce mâle, qui peut être assimilée à une vis, et qui comporte une partie sensiblement cylindrique filetée. Les filets du filetage de la vis sont conjugués avec les filets du taraudage de l'écrou, de telle sorte que la vis peut être vissée dans l'écrou.

Un inconvénient d'un tel dispositif de fixation par vissage classique réside dans le fait que si l'on souhaite visser la vis dans l'écrou jusqu'à ce que la vis vienne se bloquer, un opérateur qui effectue une telle manoeuvre doit faire tourner la vis sur un certain nombre de tours de telle sorte que la vis parvienne jusqu'en une position de butée par rapport à l'écrou, position à partir de laquelle une poursuite de la rotation de la vis sur un certain angle de rotation relativement faible peut provoquer le coincement ou serrage de l'ensemble ainsi constitué par la vis et l'écrou.

Par exemple, il est connu d'utiliser certains dispositifs de fixation par vissage comprenant un écrou, ou généralement une pièce femelle, munie d'un trou borgne taraudé et une vis munie d'un filetage. Dans ce cas, un opérateur peut visser la vis dans le trou borgne taraudé de la pièce femelle jusqu'à ce que l'extrémité distale de la vis vienne en appui contre le fond du trou borgne taraudé de la pièce femelle. Dans cette position d'appui, la vis peut être alors serrée et relativement immobilisée dans la pièce femelle en effectuant une certaine rotation supplémentaire de la vis sur un certain angle de rotation.

Si la vis et/ou la pièce femelle est/sont réalisées en une matière présentant une résistance mécanique relativement faible, par exemple en matière plastique, le nombre de filets utiles de la pièce mâle et de la pièce femelle doit être relativement grand, par exemple compris entre 5 et 15. Il résulte de cela qu'un opérateur qui souhaite visser à fond la vis dans la pièce femelle, c'est-à-dire visser la vis dans la pièce femelle jusqu'à ce qu'elle vienne en butée par rapport à la pièce femelle afin d'obtenir un serrage ou coincement, l'opérateur doit d'abord faire tourner la vis sur un nombre de tours qui correspond sensiblement au nombre de filets utiles de la vis et de la pièce femelle. Dans certains cas particuliers de construction mécanique, on peut parfois rencontrer des dispositifs de fixation par vissage dans lesquelles la pièce femelle comprend un trou taraudé dont le nombre de filets du taraudage est encore plus grand que celui qui a été évoqué précédemment, par exemple compris entre 15 et 50 filets. Dans ce cas particulier, on comprend que l'opérateur doit effectuer un grand nombre de tours de la vis avant de parvenir à son blocage dans la pièce femelle, ce qui constitue à l'évidence un inconvénient résultant du temps relativement long pour effectuer ce nombre relativement grand de tours.

Un autre inconvénient lié aux dispositifs de fixation par vissage dans lesquels la pièce mâle et/ou la pièce femelle est/sont réalisées en une matière présentant une résistance mécanique relativement faible, par exemple en matière plastique, réside dans le fait qu'il est alors nécessaire de réaliser les filets du filetage et du taraudage selon des dimensions relativement importantes par rapport au diamètre, ce qui a pour conséquence directe que l'angle d'inclinaison des filets devient relativement grand. Si, dans ce cas, le coefficient de frottement entre la pièce mâle et la pièce femelle est relativement faible, un blocage de la pièce mâle dans la pièce femelle ne peut plus être obtenu d'une façon sûre à cause de l'angle d'inclinaison relativement grand des filets. Même si un blocage peut être obtenu, des vibrations ou d'autres sollicitations mécaniques diverses peuvent aboutir facilement à un desserrage de l'ensemble constitué par la pièce mâle et la pièce femelle.

Le document FR-A-1 113 215 décrit quant à lui une vis comportant à son extrémité une fente ou un trou axial destiné à recevoir un coin coopérant avec un trou borgne taraudé. Le coin est d'abord placé dans la fente de la vis avant l'insertion de cette dernière dans le trou. Lorsqu'on visse la vis, le coin bute contre le fond du trou borgne, puis s'enfonce progressivement dans la fente. Le coin écarte alors l'une de l'autre les deux portions de vis formées par cette fente, ce qui permet d'obtenir un blocage relatif entre la vis et les parois de l'alésage.

Un objet de la présente invention consiste à proposer un dispositif de fixation par vissage dans lequel le nombre de tours à faire effectuer par la pièce femelle est nettement plus faible que le nombre de filets utiles de la pièce femelle et de la pièce mâle.

Un autre objet de la présente invention consiste à proposer un tel dispositif de fixation par vissage dans lequel un effet de serrage efficace de la pièce femelle avec la pièce mâle peut-être obtenu alors que l'angle d'inclinaison des filets des pièces femelle et mâle est relativement grand et alors que le coefficient de frottement entre la pièce femelle et la pièce mâle est relativement faible.

L'invention concerne donc un dispositif de fixation par vissage comprenant une pièce femelle présentant un trou sensiblement cylindrique muni de filets de taraudage et une pièce mâle comprenant une tige sensiblement cylindrique munie de filets de filetage externe conjugués aux filets de taraudage.

Le dispositif de fixation par vissage selon l'invention est décrit dans la revendication 1.

Selon un mode de réalisation particulier de l'invention, l'extrémité libre de la protubérance est pointue, effilée ou arrondie de façon à faciliter l'introduction de la protubérance dans la fente tout en provoquant l'écartement des parties de la pièce mâle séparées par la fente.

Ces objets, caractéristiques et avantages, ainsi d'autres de la présente invention seront mieux compris lors de la description détaillée d'un exemple de réalisation qui va suivre, illustrée par les figures annexées parmi lesquelles :
la figure 1 est une vue en coupe longitudinale partielle d'un dispositif de fixation par vissage selon l'invention, le dispositif étant représenté dans une première position de vissage ;
la figure 2 est un vue en coupe longitudinale partielle du dispositif de la figure 1 mais dans laquelle le dispositif de fixation par vissage selon l'invention est représenté dans une seconde position de vissage ; et
la figure 3 est une section en coupe de la figure 1 suivant la ligne III-III

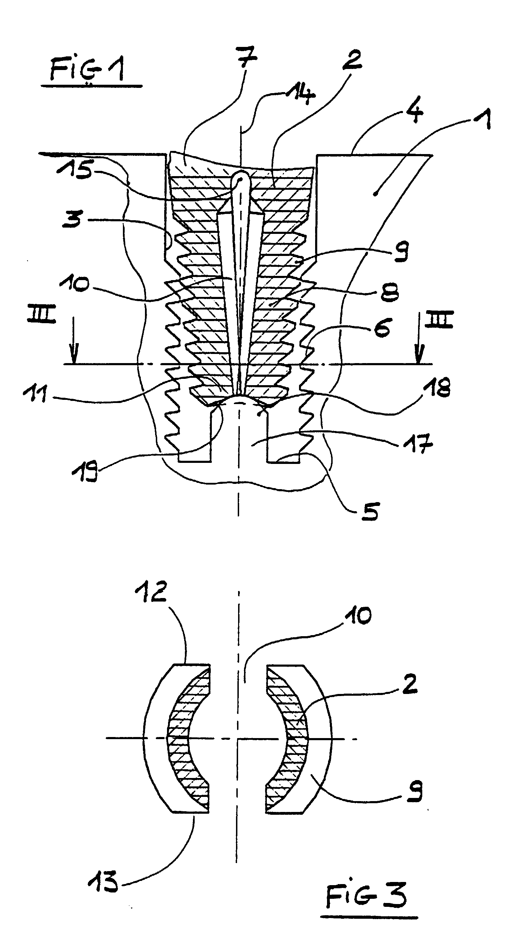

La figure 1 représente un dispositif de fixation par vissage selon la présente invention comprenant une pièce femelle 1 et une pièce mâle 2. Ces pièces femelle 1 et mâle 2 sont par exemple réalisées en plastique moulé ou injecté. La pièce femelle 1 comporte essentiellement un trou cylindrique 3 qui débouche au niveau d'une surface 4 de la pièce femelle et qui présente un fond 5. Le trou cylindrique 3 comporte des filets de taraudage 6. Le taraudage peut être constitué par un seul filet 6 ou par plusieurs filets 6 parallèles.
Le taraudage peut-être constitué de préférence par un ou plusieurs filets 6 qui présentent une dimension relativement grande par rapport au diamètre du trou cylindrique 3. Il résulte de cela que les filets 6 ont alors un angle d'inclinaison relativement grand, par exemple compris et 5 et 20 degrés. La longueur de la partie taraudée 6 peut être relativement grande, par exemple comprise, entre une fois et dix fois le diamètre du trou cylindrique 3. Des longueurs de taraudage encore plus grandes pourraient être envisagées sans que cela ne constitue en rien un inconvénient par rapport au fonctionnement du dispositif de vissage selon la présente invention, comme on pourra le comprendre par la suite. D'autres caractéristiques concernant les filets 6 et d'autres parties de la pièce femelle 1 seront décrites par la suite.

La pièce mâle 2 comporte essentiellement une tige allongée 7 et une partie située au niveau de l'extrémité libre de la tige 7 qui comporte des filets de filetage. La partie d'extrémité filetée 8 est une partie cylindrique qui comporte des filets de filetage dont la forme correspond de façon conjuguée à la forme des filets de taraudage 6 de la pièce femelle 1. Sur la figure 1, on voit que la partie filetée 8 ne présente pas un contour extérieur cylindrique mais un contour extérieur sensiblement conique, mais ceci résulte de la position particulière de la pièce mâle 2 dans la pièce femelle 1, comme on le comprendra par la suite.

La pièce mâle 2 comporte en outre une fente longitudinale 10 qui s'étend sensiblement sur toute la partie filetée 8 et qui débouche au niveau d'une extrémité distale 11 de la partie filetée 8. De préférence, le fond 15 de la fente 10 est situé en arrière de l'extrémité proximale de la partie filetée 8.

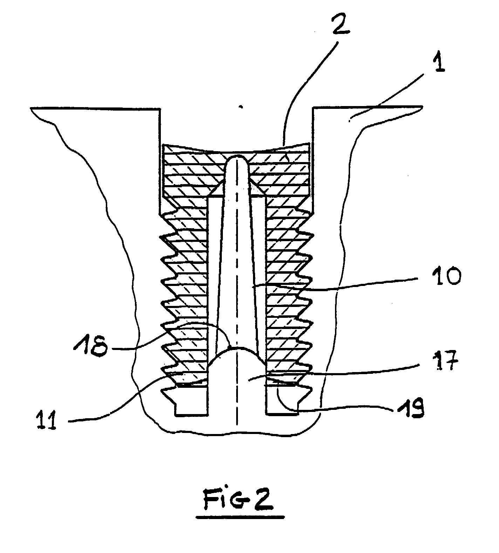

Comme on peut le voir sur la figure 3, la pièce mâle 2 comporte en outre deux méplats diamétralement opposés, et parallèles au sens de déformation des parties 8 et 11 et ménagés longitudinalement au niveau de la partie filetée 8, ces deux méplats 12, 13 étant ménagés au niveau de l'endroit où débouche latéralement la fente longitudinale 10, permettant ainsi un dégagement du filet de la partie mâle 9 au filet de la partie femelle 6.

Les filets 9 de la pièce mâle 2 ainsi que les filets conjugués 6 de la pièce femelle 1 présentent de préférence, comme cela est représenté sur les figures, des flancs dissymétriques. Comme on peut le voir sur les figures, les filets 6 de la pièce femelle 1 ont des flancs situés du côté du fond 5 du trou cylindrique 3 qui sont moins inclinés par rapport à l'axe longitudinal 14 que les flancs situés du côté de la surface 4 au niveau de laquelle débouche le trou cylindrique 3. D'une manière semblable, les filets 9 de la pièce mâle 2 ont des flancs situés du côté de l'extrémité distale 11 qui sont moins inclinés par rapport à l'axe longitudinal 14 que les flancs situés du côté de l'extrémité proximale de la partie filetée 8. Les angles d'inclinaison respectifs des flancs des filets 6 et 9 sont de préférence égaux l'un à l'autre de telle sorte que les filets 6 et 9 se conjuguent parfaitement. Les filets 6 et 9 peuvent également être à double filets.

Il résulte de cela que lorsqu'un opérateur introduit la pièce mâle 2 dans la pièce femelle 1 en enfonçant longitudinalement la pièce mâle 2 sans la faire tourner, par exemple par simple pression du pouce, l'extrémité distale 11 de la partie filetée 8 vient au niveau de l'extrémité distale de la partie taraudée de la pièce femelle 1. Un filet 9 situé au niveau de l'extrémité distale 11 de la pièce mâle 2 vient alors en contact avec un filet 6 situé au niveau de l'extrémité distale de la partie taraudée de la pièce femelle 1. Ces deux filets présentant des flancs ayant une inclinaison relativement faible par rapport à l'axe 14, le fait d'exercer une force de poussée sur la pièce mâle 2 en direction de son introduction dans la pièce femelle 1 a pour conséquence qu'il se crée une force de réaction de la pièce femelle 1 sur la pièce mâle 2 au niveau des flancs des filets qui sont en contact l'un avec l'autre, cette force de réaction tendant à pousser latéralement la partie filetée 8 de la pièce mâle 2 en direction de l'axe longitudinal 14. Autrement dit, le diamètre externe de la partie filetée 8 de la pièce mâle 2 est alors diminué, principalement au niveau de son extrémité distale 11. Cette diminution du diamètre est obtenue par un fléchissement élastique des deux parties séparées de la partie filetée 8, ces deux parties étant séparées par la présence de la fente longitudinale 10. La flexion élastique des deux parties séparées de la partie filetée 8 s'effectue principalement au voisinage du fond 15 de la fente longitudinale 10. Si l'on poursuit le déplacement forcé longitudinal de la pièce mâle 2 dans le sens de son introduction dans la pièce femelle 1, les filets 9 glissent successivement sur les filets 8 en sautant d'un filet au suivant à la manière d'un cliquet sautant sur des dents de scie d'une crémaillère.

Quand la pièce mâle 2 descend jusque vers le fond 5 de la pièce femelle 1, l'extrémité distale 11 de la pièce mâle 2 vient buter sur une protubérance 17 qui fait saillie à partir du fond 5 de la pièce femelle 1 longitudinalement en direction de la pièce mâle 2. De préférence, la protubérance 17 a son extrémité libre 18 arrondie ou en forme de pointe et l'extrémité débouchante de la fente 10 de la pièce mâle 2 comprend une partie en évasement 19. les surfaces 18 et 19 servent à favoriser l'introduction de la protubérance 17 dans la fente 10 tout en écartant de façon forcée la fente 10 (pour passer de la position de la figure 1 à la position de la figure 2).

Lorsque la pièce mâle 2 parvient en butée contre la protubérance 17, la fente 10 s'écarte et les filets 6 et 9 entrent en interpénétration, suite à quoi, l'opérateur peut tourner la pièce mâle ce qui fait que les filets 6 et 9 qui sont alors en interpénétration ou en prise peuvent agir mutuellement pour provoquer l'effet normal de vissage. Par conséquent, l'opérateur peut finir de visser la pièce mâle 2 dans la pièce femelle 1 pour venir jusqu'en position de blocage (figure 2) en effectuant seulement un nombre de tours de vissage faible, par exemple compris entre 1/2 tour et 5 tours, pour passer de la position de début de vissage (figure 1) à la position de fin de vissage ou position de blocage (figure 2). Le dévissage s'effectue de manière classique par rotation de la partie mâle dans le sens inverse à celui du vissage.
La présente invention permet ainsi de pré-fixer rapidement une face avant de coffret-électrique ou autres objets sans l'aide d'outils, par exemple avec le pouce, par simple poussée sur la pièce mâle. Par contre le démontage nécessite un outil, souvent imposé par les normes concernant le matériel électrique, pour accéder aux parties/éléments sous tension.

## Revendications

1. Dispositif de fixation par vissage comprenant une pièce femelle (1) munie d'un trou borgne (3) présentant des filets de taraudage (6) et une pièce mâle (2) présentant des filets de filetage externe (9) et comprenant une fente longitudinale (10) débouchant au niveau de son extrémité distale (11), caractérisé en ce que :
une protubérance (17) fait saillie à partir du fond du trou borgne (3) de la pièce femelle longitudinalement en direction de la pièce mâle ; et
la fente longitudinale (10) délimite des parties adaptées à fléchir élastiquement, transversalement l'une vers l'autre, de manière à ce que, dans un premier temps, la pièce mâle puisse être introduite dans une partie de la pièce femelle sans tourner la pièce mâle, du fait que les parties de la pièce mâle séparées par la fente (10) peuvent se rapprocher élastiquement l'une de l'autre et faire en sorte que les filets de filetage externe (9) ne se vissent pas avec les filets de taraudage (6), et que lorsque l'extrémité distale (11) de la pièce mâle vient en contact avec l'extrémité libre (18) de la protubérance (17), ce contact provoque l'écartement des parties de la pièce mâle séparées par la fente (10) et la mise en prise des filets de filetage externe avec les filets de taraudage, puis dans un second temps, la pièce mâle (2) puisse être actionnée en rotation sur un faible nombre de tours, provoquant le vissage de la pièce mâle dans la pièce femelle jusqu'à venir en position de blocage.

2. Dispositif de fixation par vissage selon la revendication 1, caractérisé en ce que l'extrémité libre (18) de la protubérance est pointue, effilée ou arrondie de façon à faciliter l'introduction de la protubérance (17) dans la fente (10) tout en provoquant l'écartement des parties de la pièce mâle séparées par la fente.

3. Dispositif de fixation par vissage selon la revendication 1 ou 2, caractérisé en ce que la pièce mâle (2) comporte deux méplats (12, 13) diamétralement opposés et ménagés longitudinalement au niveau de la partie filetée (8) où débouche la fente (10).

4. Dispositif de fixation par vissage selon la revendication 1, 2 ou 3, caractérisé en ce que les pièces mâle (2) et femelle (1) sont réalisées en plastique.

5. Dispositif de fixation par vissage selon la revendication 1, 2, 3 ou 4, caractérisé en ce que les filets (6,9) des pièces mâles (2) et femelle (1) présentent des flancs dissymétriques.

## Patentansprüche

1. Schraubbefestigungsvorrichtung, die ein Aufnahmeteil (1) mit einem Sackloch (3) mit Innengewindegängen (6) sowie ein Einsatzteil (2) mit Außengewindegängen (9) und einem Längsschlitz (10)umfaßt, der an seinem entfernten Ende (11) nach außen geführt ist, dadurch gekennzeichnet, daß
ein Zapfen (17) längs aus dem Boden des Sacklochs (3) des Aufnahmeteils in Richtung des Einsetzteils hervorsteht und
der Längsschlitz (10) Schenkel begrenzt, die sich quer in Richtung aufeinander hin elastisch verbiegen können, derart daß das Einsetzteil in einer ersten Phase ohne Drehung des Einsetzteils in einen Teil des Aufnahmeteils eingeführt werden kann, da die durch den Schlitz (10) voneinander getrennten Schenkel des Einsetzteils elastisch näher gebracht werden können, so daß sich die Außengewindegänge (9) nicht mit den Innengewindegängen (6) verschrauben, und daß bei Berührung des freien Endes (18) des Zapfens (i7) durch das entfernte Ende (11) des Einsetzteils diese Berührung das Auseinanderspreizen der durch den Schlitz (10) voneinander getrennten Schenkel des Einsetzteils sowie das Ineinandergreifen der Außengewindegänge mit den Innengewindegängen bewirkt und das Einsetzteil (2) anschließend in einer zweiten Phase durch eine geringe Anzahl von Umdrehungen betätigt werden kann, wodurch die Verschraubung des Einsetzteils im Aufnahmeteil bis zum Erreichen der Blockierstellung bewirkt wird.

2. Schraubbefestigungsvorrichtung nach Anspruch 1, dadurch gekennzeichnet, daß das freie Ende (18) des Zapfens spitz, konisch oder abgerundet ausgeführt ist, so daß das Eindringen des Zapfens (17) in den Schlitz (10) erleichtert wird und dabei das Auseinanderspreizen der durch den Schlitz voneinander getrennten Schenkel des Einsetzteils bewirkt.

3. Schraubbefestigungsvorrichtung nach Anspruch 1 oder 2, dadurch gekennzeichnet, daß das Einsetzteil (2) zwei diametral einander gegenüberliegende und längs des Gewindeteils (8) ausgebildete Abflachungen (12, 13) aufweist.

4. Schraubbefestigungsvorrichtung nach Anspruch 1, 2 oder 3, dadurch gekennzeichnet, daß das Einsetzteil (2) und das Aufnahmeteil (1) aus Kunststoff bestehen.

5. Schraubbefestigungsvorrichtung nach Anspruch 1, 2, 3 oder 4, dadurch gekennzeichnet, daß die Gewindegänge (6, 9) des Einsetzteils (2) und des Aufnahmeteils (1) unsymmetrische Flanken aufweisen.

## Claims

1. A fixing device by screwing comprising a female part (1) provided with a blind hole (3) presenting tapped threads (6) and a male part (2) presenting extemal screw cut threads (9) and comprising a longitudinal slot (10) opening out at the level of its distal end (11), characterized in that :
a protuberance (17) protrudes out from the bottom of the blind hole (3) of the female part longitudinally in the direction of the male part ; and
the longitudinal slot (10) bounds parts designed to flex elastically, transversely from one another, so that, in a first stage, the male part can be inserted in a part of the female part without tuming the male part, due to the fact that the parts of the male part separated by the slot (1) can move elastically towards one another and make the extemal screw cut threads (9) not screw with the tapped threads (6), and that when the distal end (11) of the male part comes into contact with the free end (18) of the protuberance (17), this contact causes separation of the parts of the male part separated by the slot (10) and engagement of the extemal screw cut threads with the tapped threads, then in a second stage, the male part (2) can be actuated in rotation a small number of tums causing the male part to be screwed into the female part until the blocked position is reached.

2. The fixing device by screwing according to claim 1, characterized in that the free end (18) of the protuberance is pointed, tapered or rounded to facilitate insertion of the protuberance (17) into the slot (10) while causing separation of the parts of the male part separated by the slot.

3. The fixing device by screwing according to claim 1 or 2, characterized in that the male part (2) comprises two diametrically opposed flats (12, 13) arranged longitudinally at the level of the threaded part (8) where the slot (10) opens out.

4. The fixing device by screwing according to claim 1, 2 or 3, characterized in that the male part (2) and female part (1) are made of plastic.

5. The fixing device by screwing according to claim 1, 2, 3 or 4, characterized in that the threads (6, 9) of the male part (2) and female part (1) present dissymmetrical flanks.
